(19) Europäisches Patentamt
European Patent Office
Office européen des brevets

(11) Publication number: **0 031 839**
**B1**

(12) # EUROPEAN PATENT SPECIFICATION

(45) Date of publication of patent specification: **13.11.85**

(51) Int. Cl.[4]: **C 08 K 5/32,** C 07 C 11/00

(21) Application number: **80901440.0**

(22) Date of filing: **19.06.80**

(86) International application number: **PCT/US80/00775**

(87) International publication number: **WO 81/00110 22.01.81 Gazette 81/02**

(54) **IMPROVED RIGID VINYL CHLORIDE POLYMER COMPOSITIONS.**

(30) Priority: **09.07.79 US 55862**

(43) Date of publication of application: **15.07.81 Bulletin 81/28**

(45) Publication of the grant of the patent: **13.11.85 Bulletin 85/46**

(84) Designated Contracting States: **CH DE FR GB LI NL SE**

(56) References cited:
**FR-A-2 337 746**
**NL-A-7 900 482**
**US-A-4 053 453**
**US-A-4 247 451**

(73) Proprietor: **The B.F. GOODRICH Company**
**Dept. 0015 WHB-6 500 South Main Street**
**Akron, Ohio 44318 (US)**

(72) Inventor: **BROWN, Randall Jay**
**730 West Shore**
**Sheffield Lake, OH 55054 (US)**

(74) Representative: **von Kreisler, Alek, Dipl.-Chem. et al**
**Deichmannhaus am Hauptbahnhof**
**D-5000 Köln 1 (DE)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 031 839 B1

Courier Press, Leamington Spa, England.

**Description**

Background of the Invention

Rigid vinyl chloride polymer compositions are well known. Such materials normally contain small amounts of copolymers of styrene and acrylonitrile, styrene and methacrylates and other alkyl alkacrylate processing aids. Typical compositions are described in U.S. Patents 2,646,417 and 2,791,600. These compositions find many applications as structural plastics, and while they have resistance to burning, under intense conditions such polymers do burn and form undesirable smoke. U.S. Patent 4,053,453 provides rigid vinyl halide polymer compositions containing copper oxalate and amine molybdates that suppress smoke formation when such polymers burn. In many applications these rigid compositions may be deficient in impact resistance, and it is desirable to add impact modifiers to the compositions. Unfortunately many of these materials contribute to smoke formation during burning of the compositions. Improved vinyl chloride compositions which are impact resistant and have improved resistance to fire and have low smoke generation are desired.

Summary of the Invention

Rigid vinyl chloride polymer compositions, substantially free of liquid ester type plasticizers, and containing styrene copolymer process modifiers, copper oxalate and an amine molybdate have improved impact resistance when there is also present small amounts of copolymers of ethylene and vinyl acetate and graft copolymers of alkacrylates, butadiene, and styrenes (MBS) polymers, which compositions form less smoke than when either of these impact modifiers alone is included in the compositions.

Detailed Description

The vinyl chloride polymers used in this invention include homopolymers, copolymers and blends of homopolymers and/or copolymers. There are used vinyl chloride and vinylidene chloride polymers that contain up to 50% by weight of at least one other olefinically unsaturated monomer, more preferably at least one other vinylidene monomer (i.e., a monomer containing at least one terminal $CH_2=C<$ group per molecule) copolymerized therewith, even more preferably up to 20% by weight of such monomers. Suitable monomers include α-olefins containing from 2 to 12 carbon atoms, more preferably from 2 to 8 carbon atoms, such as ethylene, propylene, 1-butene, isobutylene, 1-hexene, 4-methyl-1-pentene and the like; dienes containing from 4 to 10 carbon atoms including conjugated dienes as butadiene, isoprene, piperylene and the like; ethylidene norbornene and dicyclopentadiene; vinyl esters and allyl esters such as vinyl acetate, vinyl chloroacetate, vinyl propionate, vinyl butyrate, vinyl laurate, vinyl benzoate, allyl acetate and the like; vinyl aromatics such as styrene, α-methyl styrene, chlorostyrene, vinyl toluene, vinyl naphthalene and the like; vinyl and allyl ethers and ketones such as vinyl methyl ether, allyl methyl ether, vinyl isobutyl ether, vinyl n-butyl ether, vinyl chloroethyl ether, methyl vinyl ketone and the like; vinyl nitriles such as acrylonitrile, methacrylonitrile and the like; cyanoalkyl acrylates such as α-cyanomethyl acrylate, the α-, β- and γ-cyanopropyl acrylates and the like; olefinically unsaturated carboxylic acids and esters thereof, including α,β-olefinically unsaturated acids and esters thereof such as acrylic acid, methacrylic acid, ethacrylic acid, methyl acrylate, ethyl acrylate, chloropropyl acrylate, butyl acrylate, hexyl acrylate, 2-ethylhexyl acrylate, dodecyl acrylate, octadecyl acrylate, cyclohexyl acrylate, phenyl acrylate, glycidyl acrylate, methoxyethyl acrylate, ethoxyethyl acrylate, hexylthioethyl acrylate, methylmethacrylate, ethyl methacrylate, butyl methacrylate, glycidyl methacrylate and the like wherein the alkyl groups contain 1 to 12 carbon atoms, and including esters of maleic and fumaric acid and the like; amides of the α,β-olefinically unsaturated carboxylic acids such as acrylamide, methacrylamide, and the like; divinyls, diacrylates and other polyfunctional monomers such as divinyl benzene, divinyl ether, diethylene glycol diacrylate, ethylene glycol dimethacrylate, methylene-bis-acrylamide, allyl pentaerythritol, and the like; and bis(β-haloalkyl) alkenyl phosphonates such as bis(β-chloroethyl) vinyl phosphonate and the like.

A group of particularly useful comonomers include 1-olefins containing from 2 to 8 carbon atoms; vinyl esters and allyl esters; olefinically unsaturated carboxylic acids and esters thereof, especially α,β-olefinically unsaturated acids and esters thereof; esters of maleic and fumaric acid and the like; amides of α,β-olefinically unsaturated carboxylic acids; and vinylidene chloride.

These vinyl chloride polymers normally are high molecular weight polymers having a specific viscosity greater than 0.4 measured as a 0.4% solution in nitrobenzene.

The vinyl chloride polymers may be prepared by any method known to the art such as by emulsion, suspension, bulk or solution polymerization. The additive compounds may be mixed with the polymer emulsion, suspension, solution or bulk mass before monomer recovery and/or drying. More preferably the compounds may be mixed with dry granular or powdered polymers. The polymers and compounds may be mixed thoroughly in granular or powder form in apparatus such as a Henschel mixer or the like. Alternatively, this step may be eliminated and the mixing done while the polymer mass is fluxed, fused and masticated to homogeneity under fairly intensive shear in or on a mixer apparatus having its metal surface in contact with the material. The fusion temperature and time will vary according to the polymer compositions and level of additive compounds but will generally be in the range of 149 to 204°C (300 to 400°F) and 2 to 10 minutes.

The vinyl chloride polymers may also be mixed with standard compounding ingredients known to

those skilled in the art, non liquid ester type plasticizers, lubricants, stabilizers, fillers, colorants, processing aids, and the like. While these compounds are most effective in vinyl chloride polymers substantially free of plasticizers, they are also of value in reducing smoke formation of vinyl chloride polymers plasticized by non liquid ester type plasticizers.

The copper oxalate and amine molybdates are normally used in powder form in amounts greater than 0.1 part total per 100 weight parts of vinyl chloride polymer, more preferably from 1 to 20 total weight parts per 100 weight parts of vinyl chloride polymers. From 1 to 10 combined weight parts per 100 weight parts of polyvinyl chloride is a very practical range providing a good balance of desirable properties in the compounds. The useful ratio of copper oxalate to amine molybdate is from 1:10 to 10:1 on a weight basis. The copper oxalate and amine molybdate are readily mixed with the vinyl chloride polymers in powder form as is any other powder ingredient mixed with vinyl chloride polymers, master-batched and the like, as is well known to those skilled in the art; i.e., U.S. Patent No. 4,053,453.

Any amine molybdate may be used. Typical amine molybdates are described in U.S. Patent No. 4,053,455. Amine molybdates are typically produced by reacting an amine with $MoO_3$, molybdic acid or a molybdenum salt such as ammonium molybdate, ammonium dimolybdate, ammonium heptamolybdate (also known as ammonium paramolybdate), ammonium octamolybdate, sodium molybdate or the like. Excellent results have been obtained using ammonium dimolybdate, ammonium heptamolybdate, sodium molybdate, and the commercial "molybdic acid" which primarily consists of one or more ammonium molybdates.

Amines suitable for preparing the organoamine molybdates used in this invention may contain from 1 to 40 carbon atoms and from 1 to 10 primary, secondary or tertiary amine groups or a mixture thereof, more preferably from 1 to 20 carbon atoms and 1 to 4 primary amines or heterocyclic secondary amine groups. Examples of amines include aliphatic, alicyclic, aromatic and heterocyclic amines. Aliphatic amines include ethylamine, ethylenediamine, 1,2-propanediamine, 1,3-propanediamine, 1,4-butanediamine, 2-methyl-1,2-propanediamine, 1,5-pentanediamine, 1,6-hexanediamine, 1,7-heptanediamine, 1,8-octanediamine, 1,10-decanediamine, 1,12-dodecanediamine and the like. Also, aliphatic polyamines such as diethylenetriamine, triethylenetetramine, tetraethylenepentamine, bis(hexamethylene)triamine, 3,3'-iminobispropylamine, quanidine carbonate, and the like. Other suitable amines include alicyclic diamines and polyamines such as 1,2-diaminocyclohexane, 2',4-diamino-1-propyl-4-methylcyclohexane, and the like; aromatic amines as aniline, and naphthylamine; and heterocyclic amines such as melamine, N,N-dimethylaniline, pyridine, piperazine; hexamethylenetetraamine; 2,2,4-trimethyl decahydroquinoline; 2,4,6-tri(morpholino)-1,3,5-triazine; and N-(aminoalkyl)-piperazines wherein each alkyl group contains from 1 to 12 carbon atoms, more preferably 1 to 6 carbon atoms, such as N-(2-aminoethyl)piperazine, and the like. Examples of suitable polymeric amines include polyethyleneimine, polyvinylpyridine, polyvinyl pyrrolidine, and poly(2,2,4-trimethyl-1,2-dihydroquinolyl). Excellent results are obtained using melamine, piperazine, and alkyl amines wherein the alkyl contains 1 to 8 carbon atoms.

Useful melamine and substituted melamines have the formula

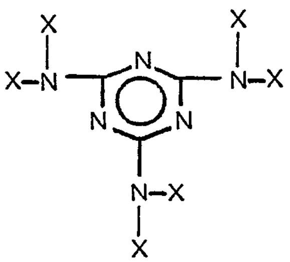

wherein X is hydrogen or an alkyl, alicyclic, aralkyl, alkaryl, aryl or heterocyclic group containing from 1 to 10 atoms of C, O, S and/or N. Two X's on each of one or more nitrogen atoms may also be joined together to form a heterocyclic ring such as a morpholino group in 2,4,6-tri(morpholino)-1,3,5-triazine. Other examples of suitable substituted melamines include N,N',N"-hexaethylmelamine; 2-anilino-4-(2',4'-dimethylanilino)-6-piperidino-1,3,5-triazine; and 2,4,6-tri(N-methylanilino)-1,3,5-triazine. The amine molybdate normally contains from about 1 to 2 moles of molybdenum per mole of amine.

The amine molybdates used in this invention may be in the form of polycrystalline or amorphous fine powders, for example with an average particle size from 0.01 to 800 μm, more preferably from 0.1 to 200 μm, and even more preferably from 0.5 to 50 μm. A preferred amine molybdate is melamine molybdate present in a weight ratio of 1:10 to 10:1 to copper oxalate. Supports such as $SiO_2$, $Al_2O_3$ and the like may be used for the smoke retardant additives.

The styrene copolymer processing aid for use in the compositions of the invention may be made from monomers containing as two essential monomers, 50 to 90% by weight of styrene or a nuclear or alpha-substituted styrene such as chloro, alkyl, and alkoxy styrenes such as chlorostyrene, vinyl toluene, α-methyl styrene, methoxystyrene and the like, with from 10 to 50% by weight of an acrylic nitrile such as acrylonitrile, methacrylonitrile, ethacrylonitrile, and the like. Other vinylidene monomers containing at

least one terminal $CH_2$=C< group may be included in amounts up to 20% by weight of the total monomers. These polymers are described in U.S. 2,646,417. A preferred styrene copolymer processing aid is a styrene/acrylonitrile copolymer, which is used in amounts of 1 to 10 weight parts per 100 weight parts of polyvinyl chloride.

The styrenealkacrylate copolymers normally contain as two essential monomers, from 75 to 25 weight percent of styrene, a nuclear or α-substituted derivative such as chlorostyrene, vinyl toluene, α-methyl styrene, methoxystyrene and the like, and from 25 to 75 weight percent of an aliphatic, alicyclic or aromatic methacrylate. Useful are alkyl methacrylates and ethacrylates wherein the alkyl group contains 1 to 8 carbon atoms, alicyclic methacrylates such as cyclohexyl methacrylate and the like. Other vinylidene monomers containing at least 1 terminal $CH_2$=C< group in amounts up to 20 weight percent may be included. Normally the copolymer contains 60 to 40 weight percent styrene and 40 to 60 weight percent methyl methacrylate.

These polymers generally have molecular weights above about 40,000. The amounts of styreneacrylonitrile copolymer used are 1 to 10 weight parts per 100 weight parts of vinyl chloride polymer.

The MBS impact modifiers are alkyl alkacrylate equivalents of ABS graft polymers and are well known. These materials are readily prepared for example by grafting methyl methacrylate and unsubstituted styrene onto a butadiene polymer substrate, which may be a copolymer of butadiene and a minor proportion of styrene. Styrene derivatives such as α-methyl styrene, chlorostyrene, methoxy styrene and the like may be employed and other alkyl alkacrylates such as methyl methacrylate, methyl ethacrylate, butylethacrylate, and the like as described hereinabove may be employed. Normally these butadiene polymers contain greater than 50 weight parts of butadiene with the remainder being from 0 weight parts to 50 weight parts of a vinylidene monomer containing at least one terminal $CH_2$=C< group, for example, 10 to 50 parts, preferably up to 35 parts, of unsubstituted styrene. At least part of the styrene and the alkyl alkacrylate are grafted onto the butadiene polymer substrate. Proportions of monomer can be from 20 to 90% of methyl methacrylate and styrene with 80 to 10 parts of the diene substrate. The styrene normally is the predominant monomer. More usually, the proportions are 30 to 60 of methyl methacrylate and styrene and 70 to 40 parts of butadiene polymer. A typical formulation would be polymerizing 20 parts of methyl methacrylate and 20 parts of styrene onto 60 parts of a copolymer of 75 parts of butadiene polymerized with 25 parts of styrene. A preferred polymer formulation of the invention contains 15 to 25 weight parts each of styrene and methyl methacrylate together with 70 to 50 weight parts of butadiene copolymer containing up to 35 weight parts styrene.

Cross-linking agents may be used in either the butadiene polymer substrate or in the graft polymerization stage, and such materials include for example diallyl acrylate, divinyl benzene and other well known difunctional cross-linking agents normally in amounts of up to 2 weight parts per 100 of the other monomers. The MBS polymers are generally a mixture of the rubber particles dispersed in a styrene/methyl methacrylate matrix, the styrene and methyl methacrylate being grafted onto the elastomeric butadiene polymer substrate.

The ethylene-vinyl acetate (EVA) copolymer impact improvers are also well known and such copolymers prepared by methods known to those skilled in the art contain from 5 to 50% of vinyl acetate copolymerized with ethylene. Use of copolymers containing the lower amounts of vinyl acetate result in less smoke formation. These copolymers normally contain more than 5% of vinyl acetate monomer, and more preferably contain 15 to 40% vinyl acetate in the copolymers.

As to the proportion of EVA/MBS, excellent results have been obtained at 8:4, 7:3 and 6:2. Preferably of the two components there is used 60 to 80 weight percent EVA and 40 to 20 weight percent of MBS. Although improvement is observed when the mixture contains greater than 50 percent EVA, amounts larger than 90 weight percent are not desired. The ratio EVA polymer/graft polymer is between 2:10 to 10:2, preferably between 4:8 to 10:2, and most preferred between 4:8 to 8:4.

The total amount of the two modifiers used is an amount of at least 3 up to 15 weight parts per 100 weight parts of vinyl chloride polymer, more preferably 6 to 12 weight parts. The process modifiers which are the styrene-acrylic nitrile and styrene-alkacrylate copolymers and impact improvers which are the EVA/MBS are readily mixed with the vinyl chloride polymers, copper oxalate and amine molybdate by any of those techniques well known to those skilled in the art.

In testing for flame retardants the following procedure is used.

Smoke retardation may be measured using an NBS Smoke Chamber according to procedures described by Gross *et al*, "Method For Measuring Smoke from Burning Materials", *Symposium on Fire Test Methods — Restraint & Smoke 1966,* ASTM STP 422, pp. 166—204. Maximum smoke density ($D_m$) is a dimensionless number and has the advantage of representing a smoke density independent of chamber volume, specimen size or photometer path length, provided a consistent dimensional systemm is used. Maximum rate of smoke generation ($R_m$) is defined in units of $min.^{-1}$. Percent smoke reduction is calculated using this equation:

$$\frac{D_m/g \text{ of control} - D_m/g \text{ of sample}}{D_m/g \text{ of control}} \times 100$$

The term "$D_m$/g" means maximum smoke density per gram of sample. $D_m$ and other aspects of the physical optics of light transmission through smoke are discussed fully in the above ASTM publication.

In the following Examples, there is reported the maximum optical density/gram sample observed with a vertical light path in the National Bureau of Smoke Chamber (NBS).

The NBS smoke chamber and its use are described by Gross et al in fire test methods ASTM STP 422, 1967, Pages 166—206. The NBS $D_m$/g smoke numbers reported are in the flaming or nonflaming mode. The $D_s$ values are instantaneous smoke density at a given time such as 90 seconds and 4 minutes. Refer to ASTM E662—79.

To demonstrate the practice of the invention and various embodiments, a series of compounds were prepared using the following general formulation: 100 weight parts of poly(vinylchloride) having an inherent viscosity (IV) of 0.9 measured by ASTM D1243—66; 2 weight parts of a copolymer of 78 weight percent styrene and 22 weight percent acrylonitrile, 1.25 weight parts of a wax ester lubricant having an ASTM D566/49 drop point of 100—105°C, a density at 20°C of 1.01 to 1.03 and an ASTM D1387/55T saponification value of 100—115 (American Hoechst), 1.25 weight parts of saturated fatty acid ester lubricant having a drop point of 50 to 52°C viscosity of 185 cp at 60°C, specific gravity of 0.921 at 40°C and refractive index of 1.450 to 1.453 (Henkel, Inc.); 4 weight parts of dibutyl tin-bis-octyl thio glycollate, 6 weight parts titanium dioxide pigment, 2 weight parts copper oxalate, 2 weight parts of amine molybdate, and EVA and/or MBS modifiers in weight parts as indicated in the tables below. The EVA contains 25 weight parts vinyl acetate. The MBS contains 20 weight parts each of styrene and methyl methacrylate grafted onto a copolymer of 75 weight parts butadiene-1,3 and 25 weight parts of styrene.

TABLE I

| | | | | | |
|---|---|---|---|---|---|
| EVA (Wt.Pts.) | 0 | 4 | 6 | 8 | 12 |
| MBS (Wt.Pts.) | 12 | 8 | 6 | 4 | 0 |
| $D_m$/gm. | 22 | 20 | 19 | 13 | 16 |
| Ds—90 sec. | 47 | 50 | 46 | 32 | 44 |
| Ds—4 min. | 230 | 230 | 185 | 140 | 185 |

The improved results obtained are readily apparent with the presence of EVA and quite unexpectedly the mixture of EVA and MBS at 8 parts EVA and 4 parts MBS shows an unexpected synergistic result better than EVA or MBS alone. Table 1 results are averages of either two or three tests.*

Another series of compounds were prepared to the same recipe above, but with varying amounts of EVA and MBS. The test results obtained were as follows: In Table II the results are the average of the two lists.

TABLE II

| | | | | |
|---|---|---|---|---|
| EVA Wt. Pts. | 6 | 6 | 10 | 10 |
| MBS Wt. Pts. | 2 | 6 | 2 | 0 |
| Izod Impact | 2.3/13.2 | —/17.9 | 2.8/1.2 | 2.2/1.1 |
| Dm | 198 | 278 | 275.5 | 343 |
| Dm/gm | 13.85 | 16.75 | 17.1 | 21.25 |
| Ds—90 sec. | 35.5 | 33.5 | 31 | 40.5 |
| Ds—4 min. | 143 | 177.5 | 169 | 212 |

When the above examples are repeated with copolymers of 75% styrene with 25% methyl methacrylate, or 95% methyl methacrylate and 5% ethyl methacrylate used in place of the styrene/acrylonitrile copolymer, and with other MBS polymers as described hereinabove and EVA polymers as described hereinabove, similar improvement in smoke formation is observed.

* Two tests are run — if the results don't reproduce within about 10%, a third is run.

**Claims**

1. An improved flame resistant low smoke generating vinyl chloride polymer composition having improved impact resistance comprising a major proportion of a vinyl chloride homopolymer or vinylidene chloride homopolymer and/or copolymers and blends thereof with other olefinically unsaturated monomers substantially free of liquid ester type plasticizers, a processing aid selected from the group consisting of styrene-acrylic nitrile copolymers and styrene-alkacrylate copolymers, flame retardant amounts of copper oxalate and an amine molybdate, and an ethylene-vinyl acetate copolymer and a graft polymer of a styrene and alkyl alkacrylate onto a butadiene polymer.

2. A composition of Claim 1 wherein the vinyl chloride polymer is polyvinyl chloride, the styrene-acrylic nitrile copolymer is a copolymer of a major proportion of styrene with acrylonitrile and the graft polymer is a graft of styrene and methyl methacrylate onto a butadiene polymer.

3. A composition of Claim 1 wherein the styrene-alkacrylate copolymer is a copolymer of a major proportion of styrene with methyl methacrylate.

4. A composition of claim 2 wherein the styrene/acrylonitrile copolymer is present in amounts of 1 to 10 weight parts per 100 weight parts of polyvinyl chloride, there is 1 to 10 combined weight parts of copper oxalate and amine molybdate per 100 weight parts of polyvinyl chloride, and 3 to 15 combined weight parts of the ethylene-vinyl acetate copolymer and graft polymer per 100 weight parts of polyvinyl chloride.

5. A composition of Claim 4 wherein the amine molybdate is melamine molybdate present in a weight ratio of 1:10 to 10:1 to copper oxalate and the weight ratio of ethylene vinyl acetate copolymer to the graft polymer is 2:10 to 10:2.

6. A composition of Claim 5 wherein the ethylene-vinyl acetate copolymer contains 15 to 40 weight percent copolymerized vinyl acetate and the weight ratio of the ethylene-vinyl acetate-copolymer to graft polymer is from 4:8 to 10:2.

7. A composition of Claim 6 wherein the weight ratio of ethylene-vinyl acetate-copolymer to graft polymer is from 4:8 to 8:4 and the graft polymer contains 15 to 25 weight parts each of styrene and methyl methacrylate polymerized in the presence of 70 to 50 weight parts of butadiene copolymer containing up to 35 weight parts styrene.

**Patentansprüche**

1. Verbesserte Flammwidrigkeit aufweisende, wenig Rauch erzeugende, Vinylchlorid-Polymer-Zusammensetzung mit verbesserter Schlagzähigkeit aus einem Hauptanteil aus einem Vinylchlorid-Homopolymerisat oder Vinylidenchlorid-Homopolymerisat und/oder Copolymeren und Gemischen derselben mit anderen olefinisch ungesättigten Monomeren im wesentlichen frei von Weichmachern vom Typ flussiger Ester, einem Verarbeitungshilfsmittel ausgewählt aus der aus Styrol-Acrylnitril-Copolymeren und Styrol-Alkacrylat-Copolymeren bestehenden Gruppe, flammhemmenden Mengen Kupferoxalat und eines Amin-molybdats und einem Ethylvinylacetat-Copolymer und einem Pfropfpolymerisat eines Styrols und eines Alkyl-alkacrylats auf ein Butadien-Polymerisat.

2. Zusammensetzung nach Anspruch 1, dadurch gekennzeichnet, daß das Vinylchlorid-Polymerisat Polyvinylchlorid ist, das Styrol-Acrylnitril-Copolymer ein Copolymerisat aus einem Hauptanteil Styrol mit Acrylnitril ist und das Pfropfpolymerisat ein Pfropfpolymerisat von Styrol und Methylmethacrylat auf ein Butadien-Polymerisat ist.

3. Zusammensetzung nach Anspruch 1, dadurch gekennzeichnet, daß das Styrol-Alkacrylat-Copolymer ein Copolymerisat aus einem Hauptanteil Styrol mit Methylmethacrylat ist.

4. Zusammensetzung nach Anspruch 2, dadurch gekennzeichnet, daß das Styrol-Acrylnitril-Copolymer in Mengen von 1 bis 10 Gew.-Teilen auf 100 Gew.-Teile Polyvinylchlorid vorliegt, 1 bis 10 Gew.-Teile Kupferoxalat und Amin-molybdat kombiniert auf 100 Gew.-Teile Polyvinylchlorid vorliegen und 3 bis 15 Gew.-Teile Ethylen-Vinylacetat-Copolymer und Pfropfpolymerisat kombiniert auf 100 Gew.-Teile Polyvinylchlorid vorliegen.

5. Zusammensetzung nach Anspruch 4, dadurch gekennzeichnet, daß das Amin-molybdat Melaminmolybdat ist, das in einem Gewichtsverhältnis von 1:10 bis 10:1 zu Kupferoxalat vorliegt, und das Gewichtsverhältnis des Ethylen-Vinylacetat-Copolymers zu dem Pfropfpolymerisat 2:10 bis 10:2 beträgt.

6. Zusammensetzung nach Anspruch 5, dadurch gekennzeichnet, daß das Ethylen-Vinylacetat-Copolymer 15 bis 40 Gew.-% copolymerisiertes Vinylacetat enthält und das Gewichtsverhältnis des Ethylen-Vinylacetat-Copolymers zu dem Pfropfpolymerisat 4:8 bis 10:2 beträgt.

7. Zusammensetzung nach Anspruch 6, dadurch gekennzeichnet, daß das Gewichtsverhältnis des Ethylen-Vinylacetat-Copolymers zu dem Pfropfpolymerisat 4:8 bis 8:4 beträgt und das Pfropfpolymerisat jeweils 15 bis 25 Gew.-Teile Styrol und Methylmethacrylat polymerisiert in Gegenwart von 70 bis 50 Gew.-Teilen Butadien-Copolymer mit einem Gehalt von bis zu 35 Gew.-Teilen Styrol enthält.

**Revendications**

1. Composition améliorée de polymère de chlorure de vinyle résistant à l'inflammation, donnant peu de fumée, ayant une résistance aux chocs améliorée, comprenant une proportion élevée d'un homopolymère de chlorure de vinyle ou d'un homopolymère de chlorure de vinylidène et/ou des copolymères et les mélanges de ceux-ci avec d'autres monomères à insaturation oléfinique pratiquement exempte de plastifiants du type ester liquide, un adjuvant de transformation choisi parmi les copolymères styrène-acrylonitrile et les copolymères styrène-alkacrylate, des quantités ignifuges d'oxalate de cuivre et d'un molybdate d'amine, et un copolymère éthylène-acétate de vinyle et un polymère greffé de styrène et d'un alkacrylate d'alkyle sur un polymère de butadiène.

2. Composition selon la revendication 1, caractérisée en ce que le polymère de chlorure de vinyle est le chlorure de polyvinyle, en ce que le polymère styrène-acrylonitrile est un copolymère d'une proportion élevée de styrène avec l'acrylonitrile et en ce que le polymère greffé résulte du greffage de styrène et de méthacrylate de méthyle sur un polymère de butadiène.

3. Composition selon la revendication 1, caractérisée en ce que le copolymère styrène-alkacrylate est un copolymère d'une proportion élevée de styrène avec le méthacrylate de méthyle.

4. Composition selon la revendication 2, caractérisée en ce que le copolymère styrène-acrylonitrile est présent en quantités de 1 à 10 parties en poids pour 100 parties en poids de chlorure de polyvinyle, en ce qu'il y a 1 à 10 parties combinées en poids d'oxalate de cuivre et de molybdate d'amine pour 100 parties en poids de chlorure de polyvinyle et 3 à 15 parties combinées en poids de copolymère éthylène-acétate de vinyle et de polymère greffé pour 100 parties en poids de chlorure de polyvinyle.

5. Composition selon la revendication 4, caractérisée en ce que le molybdate d'amine est du molybdate de mélamine présent dans un rapport pondéral à l'oxalate de cuivre de 1:10 à 10:1 et en ce que le rapport pondéral du copolymère éthylène-acétate de vinyle au polymère greffé est de 2:10 à 10:2.

6. Composition selon la revendication 5, caractérisée en ce que le copolymère éthylène-acétate de vinyle contient 15 à 40% en poids d'acétate de vinyle copolymérisé et en ce que le rapport pondéral du copolymère éthylène-acétate de vinyle au polymère greffé est de 4:8 à 10:2.

7. Composition selon la revendication 6 est caractérisée en ce que le rapport pondéral du copolymère éthylène-acétate de vinyle au polymère greffé est de 4:8 à 8:4 et en ce que le polymère greffé contient 15 à 25 parties en poids de chacun des styrène et méthacrylate de méthyle polymérisés en présence de 70 à 50 parties en poids de copolymère de butadiène contenant jusqu'à 35 parties en poids de styrène.